# EUROPÄISCHE PATENTSCHRIFT

(11) **EP 1 656 496 B1**
(45) Veröffentlichungstag und Bekanntmachung des Hinweises auf die Patenterteilung: **12.10.2011**
(21) Anmeldenummer: 04763762.4
(22) Anmeldetag: 04.08.2004
(51) Int. Cl.: F01L 1/46

(54) **PRÜFSTAND ZUR SIMULATION DER AUSLASSSTRÖMUNG EINES VERBRENNUNGSMOTORS**
TEST STAND FOR THE SIMULATION OF THE EXHAUST FLOW OF AN INTERNAL COMBUSTION ENGINE
BANC D'ESSAI DESTINE A LA SIMULATION DU FLUX DE SORTIE D'UN MOTEUR A COMBUSTION INTERNE

(30) Priorität: 12.08.2003 DE 10336970
(43) Veröffentlichungstag der Anmeldung: 17.05.2006
(73) Patentinhaber: Dr. Ing. h.c. F. Porsche AG, 70435 Stuttgart (DE)
(72) Erfinder: RUTSCHMANN, Erwin, 75233 Tiefenbronn (DE); FUOSS, Klaus, Fond du Lac, WI 54935 (US); HOLLMANN, Marcel, 07318 Saalfeld (DE)
(86) Internationale Anmeldenummer: PCT/EP2004/008705
(87) Internationale Veröffentlichungsnummer: WO 2005/014983

(56) Entgegenhaltungen:
- DE-A- 19 601 587
- JP-A- 11 311 589
- US-A- 4 996 875
- US-A- 5 709 180
- US-A- 5 808 188
- US-A1- 2001 016 044
- R.BOONEN, P. SAS: "Design of an active exhaust attenuating valve for internal combustion engines" INTERNATIONALE CONFERENCE ON NOICE VIBRATION ENGINEERING, [Online] Seiten 33-42, XP002310873 KU LEUWEN, DEPARTEMENT OF MECHANICAL ENGINEERING Gefunden im Internet: URL:http://www.isma-isaac.be/publications/ PMA_MOD_publications/ISMA2002/33_42.pdf>
- PATENT ABSTRACTS OF JAPAN Bd. 2000, Nr. 13, 5. Februar 2001 (2001-02-05) & JP 2000 297616 A (ISUZU MOTORS LTD), 24. Oktober 2000 (2000-10-24)
- PATENT ABSTRACTS OF JAPAN Bd. 2000, Nr. 02, 29. Februar 2000 (2000-02-29) & JP 11 311589 A (TOYOTA MOTOR CORP), 9. November 1999 (1999-11-09)

## Beschreibung

Die Erfindung geht aus von einem Prüfstand zur Simulation der Auslassströmung eines Verbrennungsmotors gemäß den Merkmalen des Patentanspruchs 1.

Die Leistungscharakteristik eines Viertakt - Motors wird im erheblichen Maße durch die Güte des Gaswechsels mitbestimmt. Da beim Verbrennungsmotor das Auslassventil praktisch immer den Zylinder bei einem überkritischen Druckgefälle öffnet, sind die Strömungsvorgänge in den Ladungswechselkanälen hochgradig instationär. Beim Öffnen des Auslassventils vor dem Erreichen der UT - Stellung des Kolbens wird ein Vorauslassstoß, d. h. ein Ausströmvorgang mit überkritischem Druckgefälle erzeugt. Da der vom Auslassventil eines Verbrennungsmotors überwachte Auslasskanal als eine schlecht ausgeführte Lavaldüse betrachtet werden kann, kommt es aufgrund der instationären Strömungsbedingungen zu einer Durchflussdiskontinuität, die stets zur Entstehung eines senkrechten Verdichtungsstoßes führt. Durch den senkrechten Verdichtungsstoß wird die Strömung sofort auf Unterschallgeschwindigkeit abgebremst, so dass der Abgasmassenstrom stark absinkt. Darüber hinaus werden durch den Vorauslassstoß aerodynamische Geräusche erzeugt, die entsprechende Druckschwankungen hervorrufen. Um den vorbeschriebenen Unzulänglichkeiten, insbesondere beim Vorauslassstoß zu begegnen, sind zahlreiche Untersuchungen hinsichtlich der Verbesserung der Gaswechselladungsvorgänge durchgeführt worden.

So wurde beispielsweise in MTZ (Motor Technische Zeitschrift 51, 1990, Heft 7/8, Seite 336 bis 343) eine Rechenmethode und ein Programm für die aerodynamische Überschallströmung des Auspuffs und zur Formgebung des Ventils entwickelt. Ziel dabei ist es, den Auslasskanal bzw. die Ventilgeometrie so gestalten, dass das berechnete System ohne Stöße und Pulsationen arbeitet. Dabei wird auch die Möglichkeit ins Auge gefasst, die Strömung durch Senkung der Ausströmungsgeschwindigkeiten der Verbrennungsgase zu vervollkommnen.

Die Veröffentlichung "Design of an active exhaust attenuating valve for internal combustion engines" der Autoren R. Boonen und P. Sas der "PMA Noise & Vibration research group" der "Katholieke Universiteit Leuven ", veröffentlicht im September 2002 während der "ISMA International Conference on Noise and Vibration Engineering" (XP002310873) offenbart auch einen Strömungsprüfstand.

Um die zuvor beschriebenen instationären Strömungsvorgänge bei den Gaswechselvorgängen besser verstehen bzw. untersuchen zu können, ist es Aufgabe der Erfindung, einen Prüfstand zu entwickeln, der einerseits in der Lage ist, die in der Realität stattfindenden Ausströmvorgänge anhand von verschiedenen Kanalmodellen nachzubilden und dabei reproduzierbare Ergebnisse liefert und andererseits für eine einfache konstruktive Umsetzung mit Standardbauteilen ausgestattet ist.

Die Aufgabe wird durch die im Anspruch 1 angegebenen Merkmale eines Prüfstandes gelöst.

Mit dem erfindungsgemäßen Prüfstand können auf einfache Art und Weise Auslass - Strömungsvorgänge simuliert werden, deren Ergebnisse bei der Umsetzung von Kanal- bzw. Ventil- und Ventilsitzgeometrien herangezogen werden können.

Durch die in den Unteransprüchen aufgeführten Maßnahmen und Weiterbildungen sind vorteilhafte Ausgestaltungen des Prüfstandes möglich.

Um verschiedene Auslasskanalformen sowie geometrische Formen von Auslassventilen und Ventilsitzringen untersuchen zu können, weist der Zylinderkopf einen austauschbaren Grundkörper auf, in dem der Auslasskanal und eine Mulde bzw. Kalotte zur Abbildung des Brennraumes integriert ist.

An den Grundkörper des Zylinderkopfes angrenzend ist ein Gehäuse befestigt, in dem schaltbare Tassenstößel aufgenommen sind, die durch eine auf bzw. am Gehäuse befestigte Nockenwelle betätigbar sind. Der schaltbare Ventiltrieb ist so ausgelegt, dass ein innerer Hubkolben des Tassenstößels zur Umsetzung eines Nullhubs mit einem Kreisdurchmesser der Nockenwelle zusammenwirkt, während ein äußerer Hubkolben des Tassenstößels zur Umsetzung eines Ventilshubs mit einem Nocken der Nockenwelle zusammenwirkt. Mit diesem schaltbaren Ventiltrieb können die gewünschten Ausströmvorgänge zu den vorgewählten bzw. gewünschten Betriebspunkten simuliert werden.

Innerer und äußerer Hubkolben der Tassenstößel sind über eine hydraulisch betätigbare Verriegelungseinheit schaltbar bzw. zueinander verriegelbar. Für die Öldruckversorgung des Hydrauliksystems ist dazu eine von einem Motor angetriebene Ölpumpe vorgesehen. Das Hydrauliksystem zur Öldruckversorgung für den hydraulischen Ventilspielausgleich sowie für die Ventilhubumschaltung weist neben der Ölpumpe mit Motor und ein Druckbegrenzungsventil einen Öltank, einen Ölfilter sowie ein Schaltventil auf. Für den Antrieb der Nockenwelle ist der Prüfstand mit einem Elektromotor versehen, der über einen Riementrieb die Nockenwelle antreibt. Um die für die heutigen Hochleistungsmotoren erforderlichen Drehzahlen nachbilden zu können, wird der Elektromotor durch einen Frequenzumrichter angesteuert. Mit Hilfe dieses Frequenzumrichters kann die Drehzahl des Drehstrommotors im Bereich von 250 - 8000 U/min geregelt werden.

Um am Strömungsprüfstand verschiedene Auslasskanal -, Auslassventil- und Ventilsitzringgeometrien gasdynamisch und akustisch untersuchen zu können, sind mehrere Sensoren und Mikrofone vorgesehen. Dabei sind sowohl im Zylinder als auch im Auslasskanal ein oder mehrere Druck- und Temperatursensoren angeordnet, während im Auslasskanal an mehreren Stellen verteilt, Mikrofone zur Schalldruckmessung angeordnet sind.

Ein Ausführungsbeispiel der Erfindung ist in der nachfolgenden Beschreibung und Zeichnung näher erläutert.

Es zeigen:
- Fig. 1: eine Seitenansicht eines Prüfstandes mit den wesentlichen Bauteilen,
- Fig. 2: eine untere Grundplatte des Prüfstandes,
- Fig. 3: eine obere Grundplatte des Prüfstandes,
- Fig. 4: eine Zwischenplatte des Prüfstandes mit zwei Riemenscheibenrädern

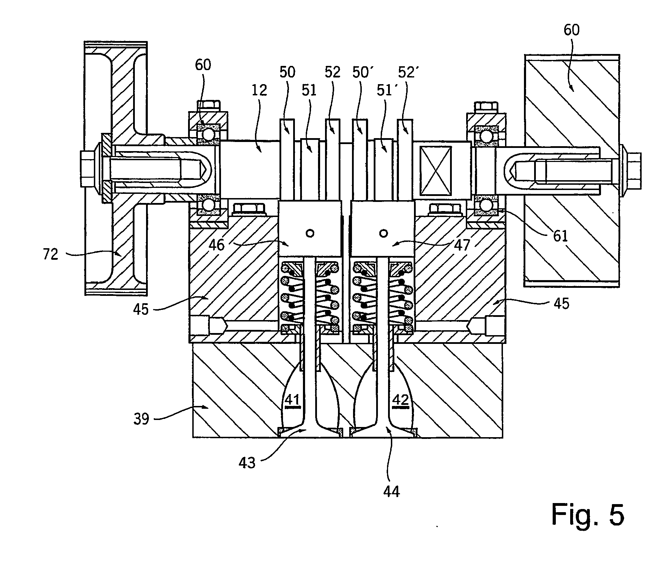

- Fig. 5: einen Längsschnitt durch den Zylinderkopf des Strömungsprüfstandes,
- Fig. 6: eine Ansicht eines Grundkörpers des Zylinderkopfes von unten,
- Fig. 7: einen Schnitt entlang der Linie VI - VI in Fig. 6,
- Fig. 8: einen Querschnitt durch ein Hubübertragungselement,
- Fig. 9: einen Längsschnitt durch ein Hubübertragungselement,
- Fig. 10: einen Hydraulikschaltplan für den schaltbaren Ventiltrieb und
- Fig. 11: eine schematische Darstellung von Zylinder und Zylinderkopf mit den vorgesehenen Messstellen.

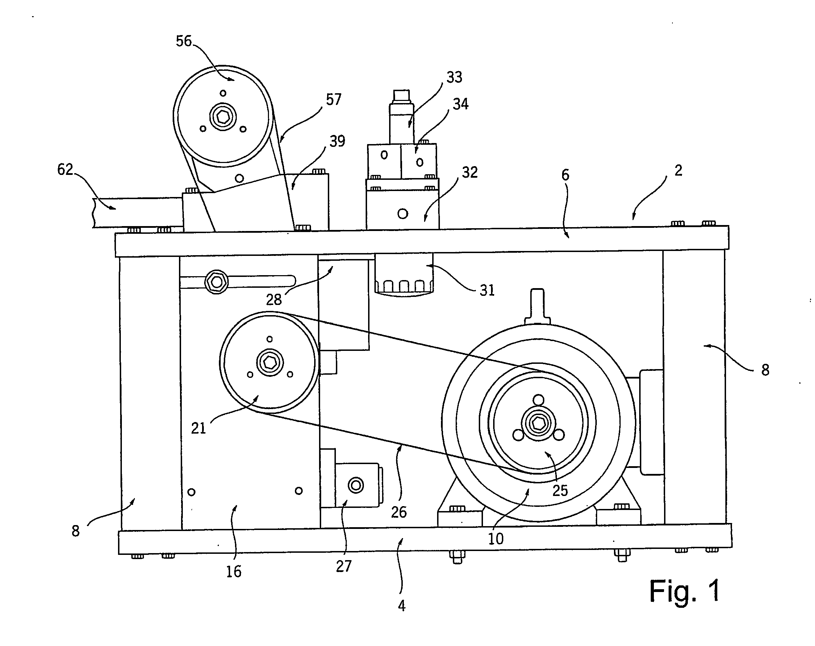

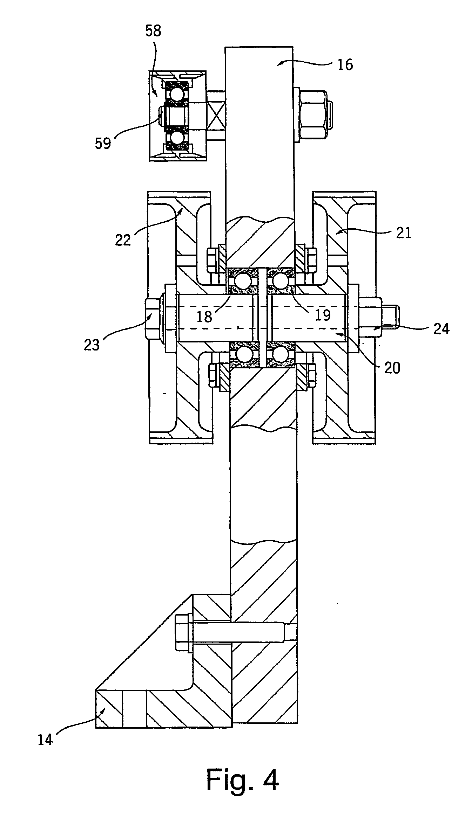

Der in Fig. 1 dargestellte Prüfstand besteht aus einem rechteckförmigen Gehäuse 2, das eine untere und obere Grundplatte 4 und 6 aufweist, die beide über vier Eckprofile 8 voneinander beabstandet sind. Auf der unteren Grundplatte 4 ist ein Elektromotor 10 befestigt, der zum Antrieb einer später noch näher beschriebenen Nockenwelle 12 vorgesehen ist. Der Elektromotor 10 wird mit Hilfe eines Frequenzumrichters angesteuert, der beispielsweise in einem auf der oberen Grundplatte 6 befestigten Schaltkasten (nicht dargestellt) aufgenommen ist. An der unteren Grundplatte 4 ist weiterhin über zwei Haltewinkel 14 und 15 eine Zwischenplatte 16 befestigt, die sich bis zur oberen Grundplatte 6 erstreckt und an dieser ebenfalls befestigt ist. Wie in Fig. 4 dargestellt, ist in der Zwischenplatte 16 eine Öffnung 17 vorgesehen, in der über zwei Rillenkugellager 18 und 19 eine Zwischenwelle 20 drehbar gelagert ist. Zu beiden Seiten der Zwischenplatte 16 sind auf der Zwischenwelle 20 jeweils ein Riemenscheibenrad 21 und 22 aufgesteckt und durch eine Sechskantschraube 23 und eine Sechskantmutter 24 axial gesichert. Auf der Antriebswelle des Elektromotors 10 ist ebenfalls ein Riemenscheibenrad 25 befestigt, wobei zwischen dem Riemenscheibenrad 25 des Elektromotors 10 und dem Riemenscheibenrad 21 der Zwischenwelle 20 ein Primär - Antriebszahnriemen 26 gelegt ist. Auf der unteren Grundplatte 4 ist weiterhin eine von einem Motor angetriebene Ölpumpe 27 befestigt, die u.a. zur Öldruckversorgung des später näher beschriebenen schaltbaren Ventiltriebs vorgesehen ist.

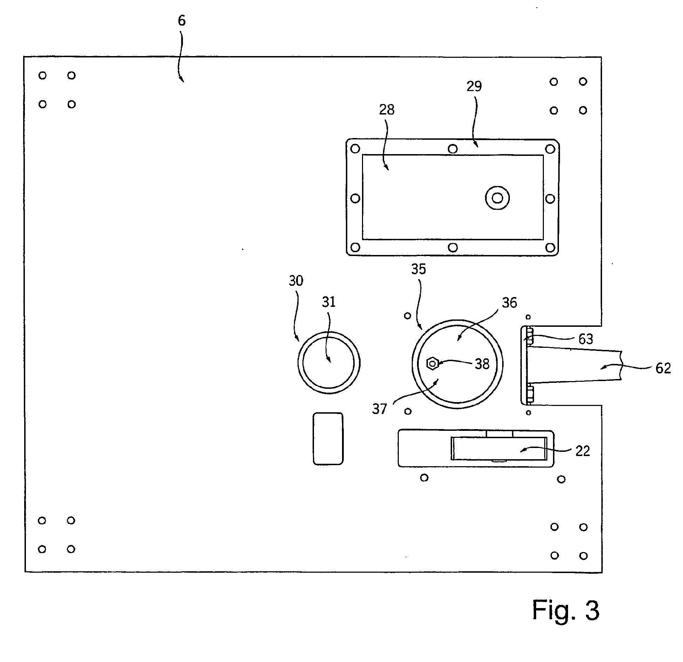

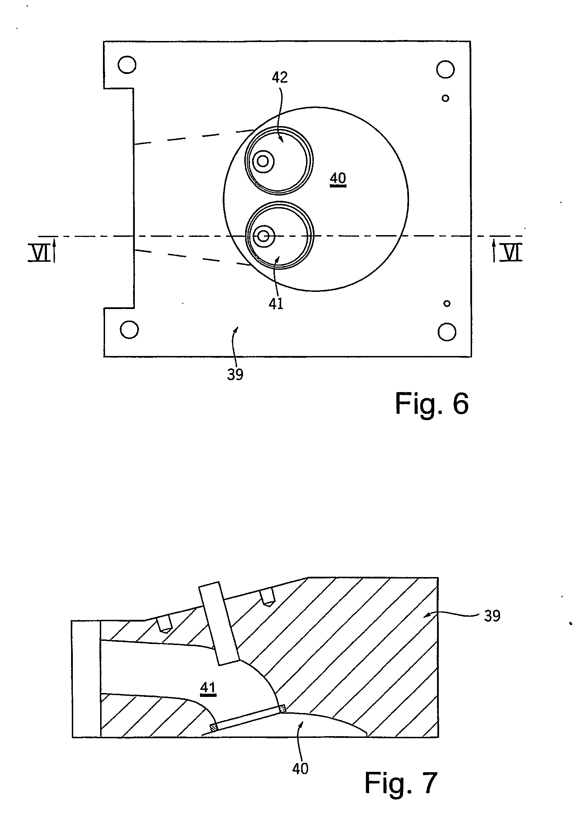

An der oberen Grundplatte 6 ist, wie aus Fig. 3 ersichtlich, ein Öltank 28 befestigt, der eine rechteckförmige Flanschfläche 29 aufweist, die gegenüber der Grundplatte 6 abgedichtet ist. In der oberen Grundplatte 6 ist weiterhin eine erste Kreisöffnung 30 eingebracht, in der ein im Ölkreislauf (später noch näher erläutert) integrierter Ölfilter 31 durchgesteckt ist. Der Ölfilter 31 ist an einem Ölfilterblock 32 befestigt, der als Baueinheit mit einem ein Schaltventil 33 aufnehmenden Schaltventilblock 34 zusammengefasst ist. In der oberen Grundplatte 6 ist eine zweite Kreisöffnung 35 eingebracht, durch die ein Zylinder 36 hindurchgeführt ist. In der bodenseitigen Stirnfläche 37 des Zylinders 36 ist ein Ventil 38 vorgesehen, das der Befüllung des Zylinders 36 mit Druckluft dient. Der topfförmig ausgebildete Zylinder 36 ist nach oben hin offen und gegenüber einem Grundkörper 39 abgedichtet. Wie aus den Fig. 6 und 7 ersichtlich, sind in dem Grundkörper 39 eine Kalotte 40 zur Abbildung bzw. Nachbildung eines Brennraumes sowie mit der Kalotte 40 in Verbindung stehende Auslasskanäle 41 und 42 integriert. Die beiden Auslasskanäle 41, 42 werden dabei durch zwei Auslassventile 43 und 44 gesteuert bzw. überwacht. An den Grundkörper 39 schließt sich ein Tassenstößelgehäuse 45 an, in dem zwei als Nockenfolgerelemente ausgebildete Tassenstößel 46 und 47 geführt sind.

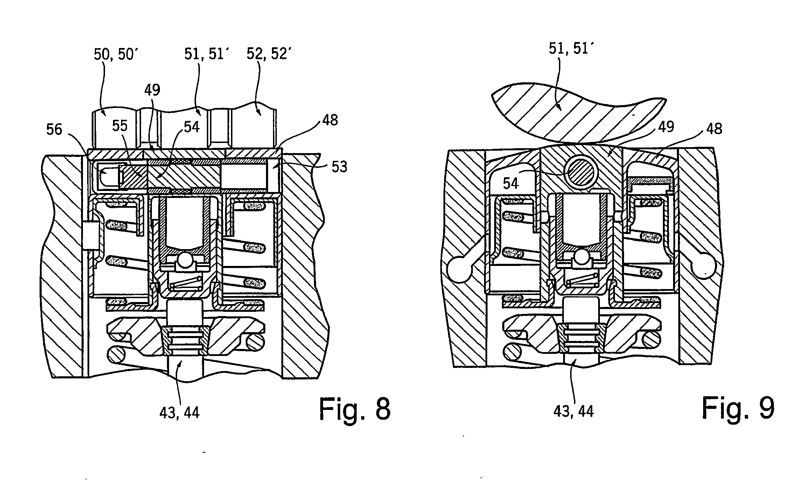

Wie in den Fig. 8 und 9 dargestellt, weisen die Tassenstößel 46, 47 zwei konzentrisch zueinander angeordnete Tassenelemente auf, im folgenden als äußerer Hubkolben 48 und innerer Hubkolben 49 bezeichnet, die jeweils mit unterschiedlichen Nocken (Teilnocken) 50 bis 52 bzw. 50' bis 52' zusammenwirken. Die Nocken 50, 52 und 50' und 52' sind untereinander gleich ausgebildet, d.h. sie haben die gleiche Hubhöhe und Phasenlage und wirken mit dem äußeren Hubkolben 48 zusammen. Der sich zwischen den beiden Nocken 50, 52 und 50' und 52' ausbildende Nockenwellenbereich 51 bzw. 51' ist demgegenüber mit einem Kreisdurchmesser versehen, der so ausgebildet ist, dass unabhängig von der Drehlage der Nockenwelle 12 beim Zusammenwirken mit dem inneren Hubkolben 49 ein Nullhub erzeugt wird, bei dem die Auslassventile 43, 44 nicht geöffnet werden. Die beiden Hubkolben 48, 49 weisen in ihrem Bodenbereich eine Bohrung 53 auf, die in der Grundkreisphase der Teilnocken 50 bis 52 bzw. 50' bis 52' (siehe Fig.8) zueinander fluchten, so dass der äußere mit dem inneren Hubkolben 48, 49 in dieser Stellung durch in der Bohrung 53 längsverschiebbare Kolbenelemente 54, 55 verriegelbar ist. Die Verschiebung der Kolbenelemente 54, 55 und damit die Verrieglung erfolgt hydraulisch; zu diesem Zweck wird über eine Öffnung 56 eine Stirnfläche des Kolbenelementes 55 mit Hydrauliköl beaufschlagt. Auf den Verriegelungsmechanismus wird nicht näher eingegangen; dieser ist beispielsweise in der DE 196 01 587 A1 oder DE 195 28 505 A1 näher beschrieben.

Sind in einer ersten Arbeits- bzw. Schaltstellung der äußere und innere Hubkolben 48 und 49 über die Kolbenelemente 54, 55 zueinander verriegelt, so wird über die äußeren Nockenbereiche 50 und 52 bzw. 50' und 52' ein entsprechender Ventilhub auf die Auslassventile 43, 44 übertragen. Durch das Betätigen bzw. Umschalten eines in einer hydraulischen Zuleitung angeordneten Steuerventils (später noch näher erläutert) wird der auf den Kolben 55 ausgeübte Druck unterbrochen bzw. soweit reduziert, dass die federbelasteten Kolben 54, 55 aus ihrer verriegelten Arbeitsstellung zurückgeführt werden, so dass die beiden Hubkolben 48, 49 wieder frei beweglich zueinander angeordnet sind. Wie bereits ausgeführt, wird aufgrund des als Kreisdurchmesser ausgebildeten Teilnockens 51 bzw. 51' in diesem Betriebszustand kein Hub auf die Auslassventile 43 und 44 übertragen.

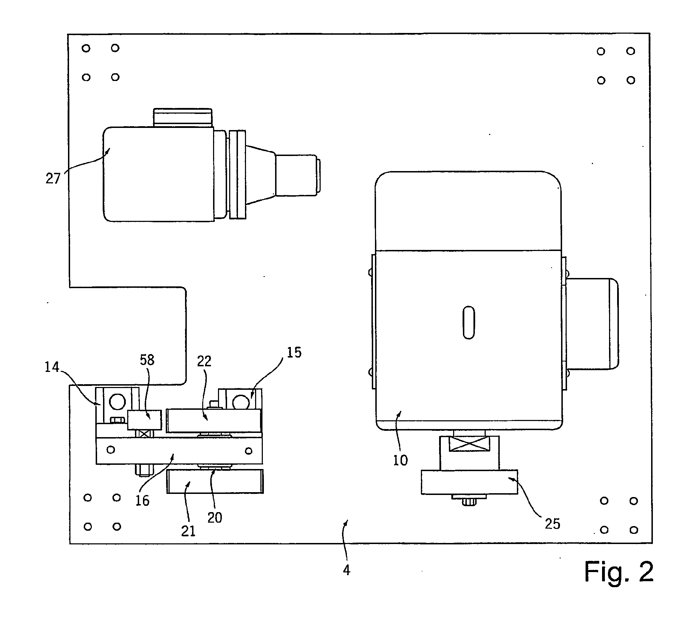

An der linken Stirnseite der Nockenwelle 12 - bezogen auf die Darstellung gemäß Fig. 2 ist ein Riemenscheibenrad 72 befestigt, das über ein Sekundär - Antriebszahnriemen 57 mit dem Riemenscheibenrad 22 der Zwischenwelle 20 verbunden ist. Für eine entsprechende Riemenspannung sorgt dabei eine an der Zwischenplatte 16 vorgesehene Spannrolle 58, die an einer an der Zwischenplatte 16 drehbar gelagerten Welle 59 befestigt ist. An der der rechten Stirnseite der Nockenwelle 12 ist weiterhin ein Schwungmassenelement 60 befestigt. Die Nockenwelle 12 ist auf dem Tassenstößelgehäuse 45 mit Hilfe von zwei Rillenkugellagern 60 und 61 drehbar gelagert.

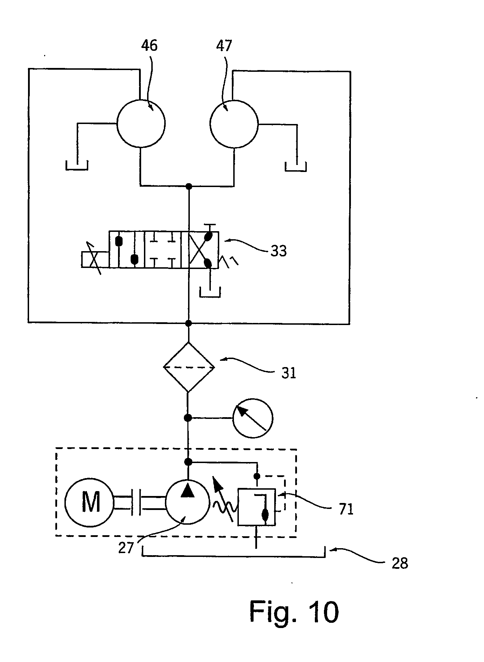

Im nachfolgenden wird anhand von Fig. 10 der für den variablen Ventiltrieb vorgesehene Hydraulikschaltkreis beschrieben. Zur besseren Übersicht ist in den anderen Figuren auf die Darstellung von hydraulischen Anschlüssen, Leitungen etc. zwischen den einzelnen im Hydraulikkreis angeordneten Bauelementen verzichtet worden. Die Verbindung der einzelnen hydraulischen Bauteile wird mit Hilfe von Stahlflexleitungen realisiert. Diese Stahlflexleitungen werden mit Doppelstutzen und Fittings an den Bauteilen befestigt.

Mit Hilfe der Ölpumpe 27 wird aus dem Öltank 28 Hydrauliköl zu den Tassenstösseln 46, 47 gefördert. Die Ölpumpe verfügt über ein federbelastetes Druckbegrenzungsventil 71, mit dem der Systemdruck direkt an der Ölpumpe 27 eingestellt werden kann. Mit den in der hydraulischen Zuleitung als 4/3- Wegeventil ausgebildeten Schaltventil 33 wird die Ventilhubumschaltung der schaltbaren Tassenstössel 46, 47 gesteuert. In der linken Schaltstellung des Schaltventils 33 wird über die in den Tassenstösseln 46, 47 vorgesehene Bohrung 53 die Verriegelung aktiviert, so dass der durch die Teilnocken 50 und 52 bzw. 50' und 52' festgelegte Ventilhub aktiviert ist. Wird das elektrisch ansteuerbare Schaltventil 33 in seine rechte Schaltposition überführt, wird die zu den Tassenstösseln 46, 47 führende Druckleitung gesperrt; das Druckbegrenzungsventil 71 öffnet und das Hydrauliköl wird im kurzen Kreislauf zum Öltank 28 zurück geführt. Der Hydrauliköldruck in der Bohrung 53 sinkt und die beiden federbelasteten Kolbenelemente 54, 55 werden in eine Stellung überführt, in der äußerer und innerer Hubkolben 48, 49 wieder frei beweglich zueinander sind. In dieser Stellung wird, wie bereits erläutert, ein Nullhub erzeugt, bei dem die Auslassventile 43, 44 nicht öffnen. Aus dem Ölfilterblock 32 führen zwei Leitungen bzw. Bohrungen (nicht dargestellt) für die Ölversorgung des bekannten hydraulischen Ventilspielausgleichs direkt zu den Tassenstösselführungen.

An die beiden Auslasskanäle 41 und 42 ist ein Auspuffrohr 62 angeschlossen, das mit Hilfe eines Flansches 63 am Grundkörper 39 befestigt ist.

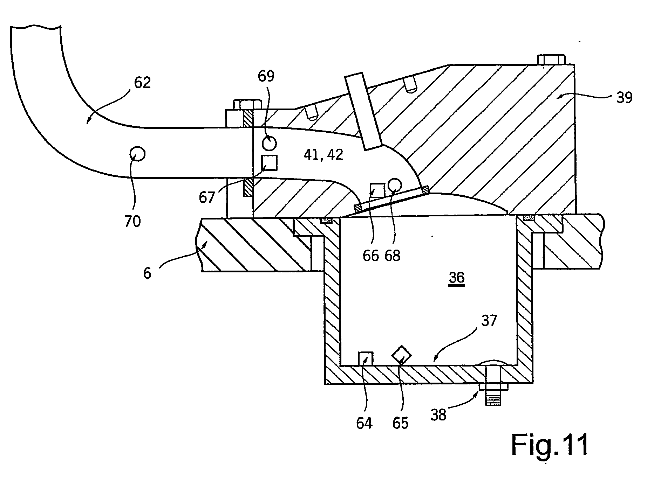

Wie aus der schematischen Darstellung gemäß Fig. 11 erkennbar, sind im Innenraum des Zylinders 36 ein Drucksensor 64 sowie ein Temperatursensor 65 angeordnet. Ein zweiter und dritter Drucksensor 66 und 67 sind in den Auslasskanälen 41 und 42 - zwei Drucksensoren 66 - in jeweils unmittelbarer Nähe zu den Ventilsitzringen und ein Drucksensor 67 am Ende der im Grundkörper 39 zusammen geführten Auslasskanäle 41 und 42 vorgesehen. Zwei erste Mikrofone 68 sind ebenfalls in unmittelbarer Nähe zu den Ventilsitzringen und ein zweites Mikrofon 69 ebenfalls am Ende der im Grundkörper 39 zusammen geführten Auslasskanäle 41 und 42 angeordnet. Ein drittes Mikrofon ist im Auspuffrohr 62 angebracht.

Zur Simulation des Vorauslassstoßes wird der Zylinder 36 über das Ventil 38 über eine externe Druckluftversorgung mit Druckluft befüllt. Über den Elektromotor 10, der, wie eingangs erwähnt, mit Hilfe eines Frequenzumrichters angesteuert ist, wird die Nockenwelle 12 über den Primär - und Sekundärzahnriemen 26 und 57 angetrieben. Mit Hilfe des Frequenzumrichters ist der Elektromotor 10 im Bereich von 250 bis 8000 U/min betreibbar. Mit der zuvor beschriebenen Ventilhubumschaltung ist es nunmehr möglich, zu den gewünschten Messzeitpunkten bzw. beim Vorliegen ausgewählter Betriebspunkte vom Nullhub (mittlerer Nockenwellenbereich 51 bzw. 51') auf einen Ventilhub (Teilnocken 50 und 52 bzw. 50' und 52') umzuschalten, der ein schlagartiges Öffnen der beiden Auslassventile 43 und 44 bewirkt.

Mit dem Öffnen der Auslassventile 43, 44 werden durch die Drucksensoren 64, 66 und 67 die Druckverläufe über dem Ventilhub gemessen, wobei die statischen Drücke aufgenommen werden. Der Verlauf des Zylinderdrucks und der Restdruck im Zylinder 36 bei Messende (Kolben in UT) sind entscheidende Kriterien für die Bewertung der Güte der gesamten Vorauslassströmung. Um auch nähere Aussagen speziell über den Vorauslassstoß treffen zu können, ist es notwenig, das Druckgefälle zwischen Kanalbeginn und Zylinder 36 zu messen. Aus diesem Grund ist Drucksensor 66 direkt am Beginn der Kanäle 41, 42 angeordnet. Das Druckverhältnis lässt eine Aussage über die Entstehung von Verdichtungsstößen in Bezug auf den Ventilhub im Bereich der Auslassventile 43, 44 bzw. der Ventilsitzringe zu. Aus den Druckverläufen zwischen Kanalbeginn und Kanalende kann der Verlust an statischem Druck in den Auslasskanälen 41, 42 ermittelt werden. Somit lässt sich eine Aussage über die Strömungsverluste in den Auslasskanälen 41, 42 treffen, da diese sich im statischen Druck niederschlagen. Mit Hilfe der drei Mikrofone 68, 69 und 70 wird der Schalldruck gemessen; daraus lässt sich der Schalldruckpegel bestimmen. Zur genaueren Analyse wird das Gesamtgeräusch in sog. Frequenzbänder (Oktav- und Terzbänder) aufgeteilt. Damit kann der Einfluss des jeweiligen Frequenzbereichs auf den Gesamtschallpegel bestimmt werden. Das Mikrofon 68 misst dabei den Schalldruck direkt am Kanalbeginn, der für die akustische Untersuchung den interessantesten Bereich darstellt. Das Mikrofon 68 befindet sich dabei in der Mischzone des turbulenten Freistrahls, welche sich direkt hinter den Auslassventilen 43, 44 ausbildet. Bei den Mischungsvorgängen entstehen freie Wirbel und starke turbulente Spannungen, die entsprechende Druckschwankungen hervorrufen. Für die Reproduzierbarkeit der Messungen ist im Zylinder36 der Temperatursensor 65 vorgesehen, da ansonsten die im Ausgangszustand auftretenden Temperaturdifferenzen die Messungen beeinflussen würden.

Aufgrund der leichten Austauschbarkeit des an der oberen Grundplatte 6 befestigten Grundkörpers 39 können alle gängigen Auslasskanalformen - steile Versuchskanäle eingeschlossen - kostengünstig untersucht werden. Damit ist ein Prüfstand zur Simulation der Auslassströmung eines Verbrennungsmotors zur Verfügung gestellt, mit dem auf einfache Art und Weise in der Praxis auftretende turbulente Strömungen beim Öffnen der Auslassventile vor UT untersucht werden können.

## Patentansprüche

1. Prüfstand zur Simulation der Auslassströmung eines Verbrennungsmotors, mit
- einem Zylinder (36), sowie mit einem als Zylinderkopf ausgebildeten Grundkörper (39), in dem zur Abbildung bzw. Nachbildung eines Brennraumes mindestens ein durch ein Gaswechselventil (43, 44) überwachter Auslasskanal (41, 42) und eine Mulde bzw. Kalotte (40) vorgesehen ist,
- einer Einrichtung zum Befüllen des Zylinders (36) mit Druckluft, und **dadurch gekennzeichnet, dass** das Gaswechselventil (43, 44) mit Hilfe einer variablen Ventilhubumschaltung betätigbar ist, und wobei
- der Prüfstand eine Steuerungseinrichtung für die Ventilhubumschaltung umfasst und
- die Ventilhubumschaltung zu den gewünschten Messzeitpunkten oder beim Vorliegen ausgewählter Betriebspunkte vom Nullhub auf einen Ventilhub umschaltet, der ein schlagartiges Öffnen des Gaswechselventil bewirkt.

2. Prüfstand nach Anspruch 1, **dadurch gekennzeichnet, dass** an dem Grundkörper (39) ein Gehäuse (45) befestigt ist, in dem schaltbare Tassenstößel (46, 47) aufgenommen sind, die durch eine auf bzw. am Gehäuse (45) befestigte Nockenwelle (12) betätigbar sind.

3. Prüfstand nach Anspruch 2, **dadurch gekennzeichnet, dass** die Tassenstößel (46, 47) aus einem inneren und einem äußeren Hubkolben (48, 49) bestehen, wobei letzterer zur Umsetzung eines Ventilhubs mit einem Nocken (50, 52 bzw. 50' und 52') und der innere Hubkolben (49) zur Umsetzung eines Nullhubs mit einem Nockenwellenbereich (51 bzw. 51') der Nockenwelle (12) zusammenwirkt, der einen Kreisdurchmesser aufweist.

4. Prüfstand nach Anspruch 2 oder 3, **dadurch gekennzeichnet, dass** der innere und äußere Hubkolben (48, 49) des Tassenstößels (46, 47) über eine hydraulisch betätigbare Verriegelungseinheit (53 bis 56) schaltbar bzw. zueinander verriegelbar sind.

5. Prüfstand nach Anspruch 4, **dadurch gekennzeichnet, dass** zur Öldruckversorgung des Hydrauliksystems eine Ölpumpe (27) vorgesehen ist, die von einem Motor angetrieben ist.

6. Prüfstand nach Anspruch 5, **dadurch gekennzeichnet, dass** das Hydrauliksystem ein Schaltventil (33), einen Öltank (28) sowie einen Ölfilter (31) aufweist.

7. Prüfstand nach einem der Ansprüche 2 bis 6, **dadurch gekennzeichnet, dass** die Nockenwelle (12) über einen Riementrieb (26, 57) von einem Elektromotor (10) angetrieben ist.

8. Prüfstand nach Anspruch 7, **dadurch gekennzeichnet, dass** zur Ansteuerung des Elektromotors (10) ein Frequenzumrichter vorgesehen ist.

9. Prüfstand nach einem der vorhergehenden Ansprüche, **dadurch gekennzeichnet, dass** im Zylinder (36) und im Auslasskanal (41, 42) Sensoren (64 bis 70) zur Erfassung physikalischer Zustandsgrößen angeordnet sind.

10. Prüfstand nach Anspruch 9, **dadurch gekennzeichnet, dass** sowohl im Zylinder (36) als auch im Auslasskanal (41, 42) ein- oder mehrere Druck- und Temperatursensoren (64 bis 67) angeordnet sind.

11. Prüfstand nach Anspruch 9, **dadurch gekennzeichnet, dass** im Auslasskanal (41, 42) an mehreren Stellen verteilt, Mikrofone (68, 69, 70) zur Schalldruckmessung angeordnet sind.

## Claims

1. Test stand for the simulation of the exhaust flow of an internal combustion engine, having
- a cylinder (36) and a base body (39) which is embodied as a cylinder head and in which at least one outlet duct (41, 42) monitored by a charge cycle valve (43, 44) and a trough or spherical cap (40) is provided in order to represent or simulate a combustion chamber,
- a device for filling the cylinder (36) with compressed air,
and **characterized in that** the charge cycle valve (43, 44) can be activated using a variable valve stroke switching means, and wherein
- the test stand comprises a control device for the valve stroke switching means, and
- at the desired measuring times or when selected operating points occur, the valve stroke switching means switches over from the zero stroke to a valve stroke which brings about sudden opening of the charge cycle valve.

2. Test stand according to Claim 1, **characterized in that** a housing (45), in which switchable bucket tappets (46, 47), which can be activated by a camshaft (12) which is secured on or to the housing (45), are accommodated is secured to the base body (39).

3. Test stand according to Claim 2, **characterized in that** the bucket tappets (46, 47) are composed of an inner and an outer reciprocating piston (48, 49), wherein in order to implement a valve stroke said outer reciprocating piston (48) interacts with a cam (50, 52 and 50' and 52', respectively), and in order to implement a zero stroke the inner reciprocating piston (49) interacts with a camshaft region (51 and 51', respectively) of the camshaft (12), which region has a circular diameter.

4. Test stand according to Claim 2 or 3, **characterized in that** the inner and outer reciprocating pistons (48, 49) of the bucket tappet (46, 47) can be switched or locked with respect to one another by means of a locking unit (53 to 56) which can be activated hydraulically.

5. Test stand according to Claim 4, **characterized in that**, in order to supply oil pressure to the hydraulic system, an oil pump (27) is provided which is driven by a motor.

6. Test stand according to Claim 5, **characterized in that** the hydraulic system has a switching valve (33), an oil tank (28) and an oil filter (31).

7. Test stand according to one of Claims 2 to 6, **characterized in that** the camshaft (12) is driven by an electric motor (10) via a belt drive (26, 57).

8. Test stand according to Claim 7, **characterized in that** a frequency converter is provided for actuating the electric motor (10).

9. Test stand according to one of the preceding claims, **characterized in that** sensors (64 to 70) for sensing physical state variables are arranged in the cylinder (36) and in the outlet duct (41, 42).

10. Test stand according to Claim 9, **characterized in that** one or more pressure and temperature sensors (64 to 67) are arranged both in the cylinder (36) and in the outlet duct (41, 42).

11. Test stand according to Claim 9, **characterized in that** microphones (68, 69, 70) for measuring sound pressure are arranged at a plurality of locations in the outlet duct (41, 42).

## Revendications

1. Banc d'essai de simulation de l'écoulement d'échappement d'un moteur à combustion interne, avec
- un cylindre (36) ainsi qu'un corps de base (39) réalisé sous forme de culasse, dans lequel sont prévus au moins un canal d'échappement (41, 42) contrôlé par une soupape d'échange gazeux (43, 44) et une auge ou calotte (40) pour représenter ou simuler une chambre de combustion,
- un dispositif de remplissage du cylindre (36) avec de l'air comprimé,
et **caractérisé en ce que** la soupape d'échange gazeux (43, 44) peut être actionnée à l'aide d'une commutation variable de la course de soupape, et dans lequel
- le banc d'essai comprend un dispositif de commande pour la commutation de la course de soupape et
- aux moments de mesure souhaités ou en cas de présence de points d'exploitation sélectionnés, la commutation de la course de soupape commute de la course nulle à une course de soupape qui actionne une ouverture brusque de la soupape d'échange gazeux.

2. Banc d'essai selon la revendication 1, **caractérisé en ce qu'**un boîtier (45) est fixé sur le corps de base (39), dans lequel sont logés des poussoirs à coupelle (46, 47) pouvant être actionnés par un arbre à cames (12) fixé sur ou contre le boîtier (45).

3. Banc d'essai selon la revendication 2, **caractérisé en ce que** les poussoirs à coupelle (46, 47) sont composés d'un piston alternatif intérieur et d'un piston alternatif extérieur (48, 49), ce dernier coopérant avec une came (50, 52 ou 50' et 52') pour réaliser une course de soupape, et le piston alternatif intérieur (49) coopérant avec une zone d'arbre à cames (51 ou 51') de l'arbre à cames (12) présentant un diamètre de cercle pour réaliser une course nulle.

4. Banc d'essai selon la revendication 2 ou 3, **caractérisé en ce que** les pistons alternatifs intérieur et extérieur (48, 49) du coulisseau à coupelle (46, 47) peuvent être accouplés ou verrouillés l'un par rapport à l'autre par l'intermédiaire d'une unité de verrouillage actionnable hydrauliquement (53 à 56).

5. Banc d'essai selon la revendication 4, **caractérisé en ce qu'**une pompe à huile (27) entraînée par un moteur est prévue pour l'alimentation en pression d'huile du système hydraulique.

6. Banc d'essai selon la revendication 5, **caractérisé en ce que** le système hydraulique présente une soupape de commande (33), un bac à huile (28), ainsi qu'un filtre à huile (31).

7. Banc d'essai selon l'une des revendications 2 à 6, **caractérisé en ce que** l'arbre à cames (12) est entraîné par l'intermédiaire d'une commande à courroie (26, 57) par un moteur électrique (10).

8. Banc d'essai selon la revendication 7, **caractérisé en ce qu'**un convertisseur de fréquence est prévu pour commander le moteur électrique (10).

9. Banc d'essai selon l'une des revendications précédentes, **caractérisé en ce que** des capteurs (64 à 70) sont disposés dans le cylindre (36) et dans le canal d'échappement (41, 42) pour détecter des variables d'état physiques.

10. Banc d'essai selon la revendication 9, **caractérisé en ce qu'**un ou plusieurs capteurs de pression et de température (64 à 67) sont disposés aussi bien dans le cylindre (36) que dans le canal d'échappement (41, 42).

11. Banc d'essai selon la revendication 9, **caractérisé en ce que** des microphones (68, 69, 70) sont disposés dans le canal d'échappement (41, 42), répartis en plusieurs endroits, pour mesurer la pression sonore.
